## Europäisches Patentamt
## European Patent Office
## Office européen des brevets

(19)

(11) Numéro de publication: **0 148 667**
**B1**

(12)

# FASCICULE DE BREVET EUROPÉEN

(45) Date de publication du fascicule du brevet:
**14.10.87**

(21) Numéro de dépôt: **84402472.9**

(22) Date de dépôt: **03.12.84**

(51) Int. Cl.⁴: **G 01 V 1/40,** E 21 B 47/00,
E 21 B 23/00

(54) Procédé et dispositif de mesures géophysiques dans un puits foré.

(30) Priorité: **09.12.83 FR 8319727**

(43) Date de publication de la demande:
**17.07.85 Bulletin 85/29**

(45) Mention de la délivrance du brevet:
**14.10.87 Bulletin 87/42**

(84) Etats contractants désignés:
**DE GB NL**

(56) Documents cité:
**FR-A-1 169 871**
**GB-A-1 193 383**
**US-A-3 690 164**
**US-A-4 325 259**

(73) Titulaire: **SOCIETE NATIONALE ELF AQUITAINE,**
**Tour Aquitaine, F-92400 Courbevoie (FR)**

(72) Inventeur: **Staron, Philippe, 9 Rue François Barbin,**
**F-92540 Mennecy (FR)**
Inventeur: **Gros, Pierre, 9 Avenue Jules Massenet,**
**F-78530 Buc (FR)**

(74) Mandataire: **Levy, David, c/o S.A. Fedit- Loriot 38,**
**avenue Hoche, F-75008 Paris (FR)**

LIBER, STOCKHOLM 1987

## Description

La présente invention concerne un procédé et un dispositif de mesures géophysiques dans un puits foré.

Les mesures faites dans un puits foré appartiennent généralement à deux grands types.

Le premier type de mesure est appelé ultrasonique. Une telle mesure est effectuée au moyen d'un outil qui est descendu dans le puits de forage, au bout d'un câble. L'outil comprend un ou plusieurs émetteurs et un ou plusieurs récepteurs, en plus des moyens nécessaires au déclenchement des émetteurs aux instants appropriés, et des moyens pour transmettre, à la surface du sol, les signaux reçus par les récepteurs, en vue de leur enregistrement et traitement.

Dans la plupart des cas, les mesures ultrasoniques sont faites pendant le déplacement de l'outil, c'est-à-dire lorsque l'outil est en mouvement dans le puits. La vitesse relativement lente de l'outil dans le puits, quelques mètres par minute, ne provoque pas de bruit parasite sur les récepteurs.

Les récepteurs utilisés, dénommés aussi transducteurs, sont des hydrophones qui sont en réalité des capteurs sensibles à la pression vibratoire.

Les capteurs reçoivent des ondes de compression et, à la rigueur, des ondes parasites issues des ondes de compression et engendrées par les hétérogénéités du milieu. La durée de chaque signal utile reçu sur le capteur, après chaque émission, est de l'ordre de quelques millisecondes, compte tenu de la fréquence des signaux émis.

Comme les mesures sont faites pendant le déplacement de l'outil, le câble de traction de l'outil est donc continuellement sous tension et s'enroule de façon continue autour d'un tambour, par exemple dont la rotation est commandée par des moyens de déplacement disposés en surface.

Il existe de nombreux outils pour la mesure ultrasonique, qui permettent de s'affranchir des ondes se propageant dans la masse même de l'outil, et de réaliser des trajets acoustiques possédant une symétrie cylindrique autour de l'axe du puits.

Le deuxième type de mesure concerne un profil sismique vertical, un profil sismique oblique ou encore un profil sismique de puits, ce deuxième type de mesure étant complètement différent du premier type rappelé précédemment pour mémoire.

En effet, pour la prospection du pétrole par exemple, il faut déterminer la nature et les caractéristiques des couches souterraines entourant le puits de forage. Pour cela, on engendre, à la surface du sol et non dans le puits de forage, une énergie sismique au moyen d'une détonation (charge explosive), d'un choc approprié (chute de poids) ou encore d'un vibrateur en contact avec la surface du sol. Cette énergie sismique crée des ondes qui se propagent dans les couches souterraines et qui sont reçues sur des géophones et non plus sur des hydrophones. Les géophones sont, par construction, des "vélocimètres" sensibles à la vitesse vibratoire, et disposés soit sur la surface du sol et alors ils reçoivent les ondes réfléchies et/ou réfractées par les différentes couches souterraines, soit dans le puits de forage mais alors ils doivent être impérativement en contact direct avec la paroi du puits de forage, contrairement à la mesure ultrasonique où les capteurs sont généralement dans le fluide emplissant ledit puits de forage.

Dans tous les cas, les géophones ou vélocimètres sont sensibles à la vitesse vibratoire et doivent permettre la détermination de tous les types d'ondes sismiques engendrées par l'énergie émise en surface. En effet, le couplage mécanique direct entre les moyens d'émission et la surface du sol, donne naissance à tous les types d'ondes puisque l'énergie sismique émise rencontre forcément des hétérogénéités dans le sous-sol exploré. Dès lors, il n'est plus possible de se contenter de recevoir sur le ou les géophones une onde particulière parmi les autres, ni de s'accommoder d'une grandeur scalaire. Au contraire, il est nécessaire que les géophones reçoivent toutes les ondes, de compression ou transverses, et dans toutes les directions où elles se propagent, de manière à pouvoir, au traitement, distinguer toutes les directions possibles des vitesses vibratoires.

Etant donné les moyens d'émission utilisés et le but à atteindre, on émet des fréquences comprises entre quelques hertz et quelques centaines de hertz, de 5 à 500 Hz par exemple, la durée du signal utile étant de quelques secondes.

Enfin, par opposition à la mesure ultrasonique, pendant la remontée de l'outil, il faut noter que dans le deuxième type de mesure auquel on se réfère, les mesures sont effectuées, le ou les géophones immobiles par rapport à la paroi et plaqués contre elle pour assurer un couplage satisfaisant.

Le traitement ultérieur des signaux reçus sur les géophones permet d'obtenir des renseignements utiles sur les couches souterraines traversées par les ondes depuis la source sismique jusqu'aux géophones.

Diverses techniques peuvent être mises en oeuvre. On peut disposer des géophones répartis régulièrement ou non, le long du puits foré et traiter les informations sur les différents géophones. On peut également utiliser un outil comprenant un géophone et qu'on arrête, à chaque niveau approprié du puits foré, pendant chaque mesure.

Dans le deuxième type de mesure, la grande difficulté provient de ce qu'on n'a pas réussi, jusqu'à maintenant, à obtenir un couplage satisfaisant du géophone sur la paroi du puits foré.

Une tentative pour surmonter la difficulté a été faite et elle est décrite dans le brevet français No.

1 169 871. Le dispositif de l'art antérieur comprend un outil comportant un élément cylindrique qui sert à maintenir l'ensemble d'un géophone à la hauteur désirée dans le puits foré, et qui empêche l'ensemble du géophone de tourner par rapport à l'outil grâce à une liaison par clavette. L'ensemble des géophones comprend deux lames à ressort en arc, disposées symétriquement de part et d'autre de l'outil qui est centré dans le puits foré, et reliées l'une à l'autre par des pivots montés sur un élément intermédiaire relié au corps de l'outil. Une des lames à ressort est en appui sur la paroi du puits foré tandis que l'autre porte, sensiblement au sommet de sa flèche, un patin, monté à pivot au milieu du ressort, ledit patin étant en contact par la face externe sur la paroi opposée à celle sur laquelle appuie le premier ressort. Un géophone est ensuite fixé sur la face interne du patin et il est relié par un câble conducteur vers l'équipement d'amplification situé à l'intérieur du corps de l'outil.

Un tel outil constitue une amélioration importante par rapport à la technique des géophones disposés sur la surface du sol ou répartis le long de la paroi du puits foré. Mais il ne résout pas entièrement le problème du couplage direct à la paroi du puits foré.

En effet, il n'y a pas contact direct du géophone sur la paroi du puits foré puisqu'il est monté sur la face interne du patin. Bien que le patin soit parfaitement rigide et que la tension des ressorts ne lui permette pas de glisser le long de la paroi du puits foré au cours de la mesure, il n'en demeure pas moins que les ondes parasites se propageant dans le corps de l'outil et créées par l'énergie émise, se propageant également dans les lames à ressort et le patin, sont reçues par le géophone. Ceci provient de ce que l'outil, le patin et à un degré moindre les ressorts à lames sont rigides.

Un autre inconvénient est que pour une mesure donnée, le géophone est orienté dans une seule direction et ne peut donc détecter qu'un type d'onde.

Un autre inconvénient, le plus grave sans doute, est que le ressort à lame supportant le géophone ne présente qu'un degré de liberté, déterminé dans le sens de la flèche du ressort. La structure du ressort et les tensions d'application développées ne lui permettent pas d'être souple dans toutes les directions. De ce fait, il n'y a pas un découplage effectif entre la masse de l'outil et la masse du géophone et du patin associé, laquelle masse del'outil, très importante par rapport à celle de l'ensemble géophone, introduit un effet parasite, lequel est d'autant plus important que la liaison du corps de l'outil avec ledit ensemble géophone est rigide.

Il faut également noter que, du fait de la liaison rigide entre la masse de l'outil et le géophone, ce dernier dont la masse est faible par rapport à celle de l'outil, ne peut vibrer utilement à la réception des hautes fréquences du spectre émis; ainsi, ces hautes fréquences se trouvent être éliminées et tout se passe donc comme si le corps de l'outil et les souplesses relatives des parois du puits de forage constituaient un filtre pour ces hautes fréquences.

Le dispositif utilisé dans le deuxième type de mesure comprend également des moyens de déplacement de l'outil qui sont reliés à ce dernier, par des moyens de traction et de suspension de l'outil.

Quels que soient ces moyens de traction et de suspension de l'outil, souples ou rigides, constitués par un câble de traction ou par une tige, les mesures sont effectuées les unes après les autres, sur toute la hauteur du puits foré, et de la manière suivante, par exemple.

On descend l'outil jusqu'à la profondeur on niveau désiré, puis on met en place ledit outil en l'immobilisant sur les parois du puits par des bras rétractables, après quoi les mesures sont effectuées pour ce niveau considéré.

Les mesures suivantes étant effectuées à un niveau supérieur, il faut remonter l'outil en rabattant les bras rétractables et en actionnant les moyens de traction, puis procéder à une nouvelle mise en place identique à celle mentionnée précédemment.

Il est évident que ces mesures séquentielles impliquent également un fonctionnement séquentiel des moyens de traction et de déplacement qui doivent être arrêtés pendant les mesures et déplacés entre les mesures. Dans le cas du câble de traction, il faut ajouter une opération supplémentaire qui est la remise sous tension dudit câble à la fin de chaque série de mesures car il est relâché pendant toute la durée des mesures de manière à découpler du point de vue sismique l'outil des moyens de déplacement de surface.

Tout ceci entraîne une perte de temps relativement importante ainsi qu'un certain nombre de réglages successifs pour les différents positionnements de l'outil dans le puits foré.

La présente invention a pour but de remédier aux inconvénients précités et de proposer un découplage effectif entre les moyens de traction et de suspension et l'outil, de manière que lesdits moyens soient déplacés en continu pendant toutes les séries de mesures géophysiques, sur toute la hauteur du puits foré, alors que les mesures sont effectuées de façon séquentielle ou discontinue.

A cet effet, la présente invention a pour objet un procédé de mesures géophysiques dans un puits foré du type dans lequel, le long des parois dudit puits foré, on déplace de manière discontinue au moins un outil de mesure, ledit outil étant relié à des moyens de traction déplacés en continu et dont la vitesse de déplacement est commandée par des moyens de commande disposés à la surface du puits foré, caractérisé en ce qu'il consiste à animer l'outil d'une vitesse relative par rapport aux moyens de traction égale et opposée à la vitesse absolue des moyens de traction de manière à rendre nulle la vitesse absolue de l'outil pendant des périodes de mesure, et en ce que la vitesse relative de l'outil est de même sens que la vitesse absolue des moyens de traction entre les périodes de mesure de telle sorte que durant ces périodes la vitesse absolue de l'outil soit supérieure à la vitesse absolue des moyens de traction.

Cela permet de découpler du point de vue sismique les moyens de traction de l'outil de mesure car lorsque l'outil de mesure est en fonctionnement, immobile dans le puits foré puisque bloqué entre les parois dudit puits, les moyens de traction sont commandés, en continu, et poursuivent leur mouvement ascendant ou descendant suivant que les mesures sont effectuées depuis le fond ou la surface du puits. Lorsque les mesures sont terminées l'outil de mesure est animé d'une vitesse de déplacement plus grande que celle des moyens de traction, de manière à rattraper tout ou partie de la distance qui les séparait et parvenir à un autre niveau dans le puits, afin de procéder à une autre série de mesures géophysiques.

Ainsi, grâce au procédé selon l'invention, l'outil est animé d'un mouvement discontinu et/ou séquentiel alors que des moyens de traction sont animés d'un mouvement continu.

Selon une autre caractéristique de l'invention, le dispositif de mise en oeuvre du procédé ci-dessus est caractérisé en ce qu'il comprend au moins un vérin à double effet dont une partie mobile est commandée en déplacement par les moyens de traction qui sont déplacés en continu, et dont l'autre partie mobile commande le déplacement discontinu dudit outil de mesure; et des moyens de commande de déplacement relatif entre les deux parties mobiles dudit vérin.

Selon une autre caractéristique de l'invention, le dispositif est du type comprenant des moyens d'émission capables de délivrer des signaux d'émission, au moins un géophone monté sur des organes élastiques qui sont reliés audit corps d'outil, ledit géophone détectant des ondes acoustiques générées par lesdits signaux d'émission après propagation dans des couches souterraines qui présentent une élasticité propre au niveau du géophone, des moyens d'enregistrement et de traitement des signaux électriques délivrés par ledit géophone en réponse aux ondes acoustiques reçues, caractérisé en ce que les organes élastiques sont constitués par des moyens souples dans au moins deux directions et interposés entre le géophone et des moyens d'application reliés au corps d'outil et destinés à appliquer ledit géophone contre la paroi du puits de forage pendant chaque détection desdites ondes, en ce que l'élasticité des moyen souples est au moins égale à l'élasticité la plus forte de la couche souterraine traversée par le puits, et en ce que la fréquence de résonance de la masse-du géophone avec les moyens souples soit au plus égale à la fréquence de résonance de ladite masse de géophone avec ladite élasticité la plus forte.

La liaison du géophone avec le corps de l'outil par des moyens souples dans au moins une direction permet de découpler présque totalement la masse du corps de l'outil de celle du géophone et, en conséquence, d'éliminer la quasi-totalité des effets parasites introduits par la masse du corps de l'outil dans les mesures. De plus, grâce à une telle liaison élastique, le géophone est capable de vibrer dans la direction de la composante de la vitesse vibratoire de l'onde qu'il peut recevoir.

D'autres avantages et caractéristiques ressortiront mieux à la lecture de la description d'un mode préféré de l'invention, donné à titre indicatif mais non limitatif, ainsi que des dessins annexés sur lesquels:
la figure 1 est une représentation schématique du dispositif selon la présente invention à l'intérieur d'un puits foré représenté en partie;
la figure 2 est une vue en coupe suivant A-A de la figure 1;
la figure 3 est une vue partielle agrandie d'un système élastique;
la figure 4 est une représentation schématique du fonctionnement du dispositif dans le puits foré.

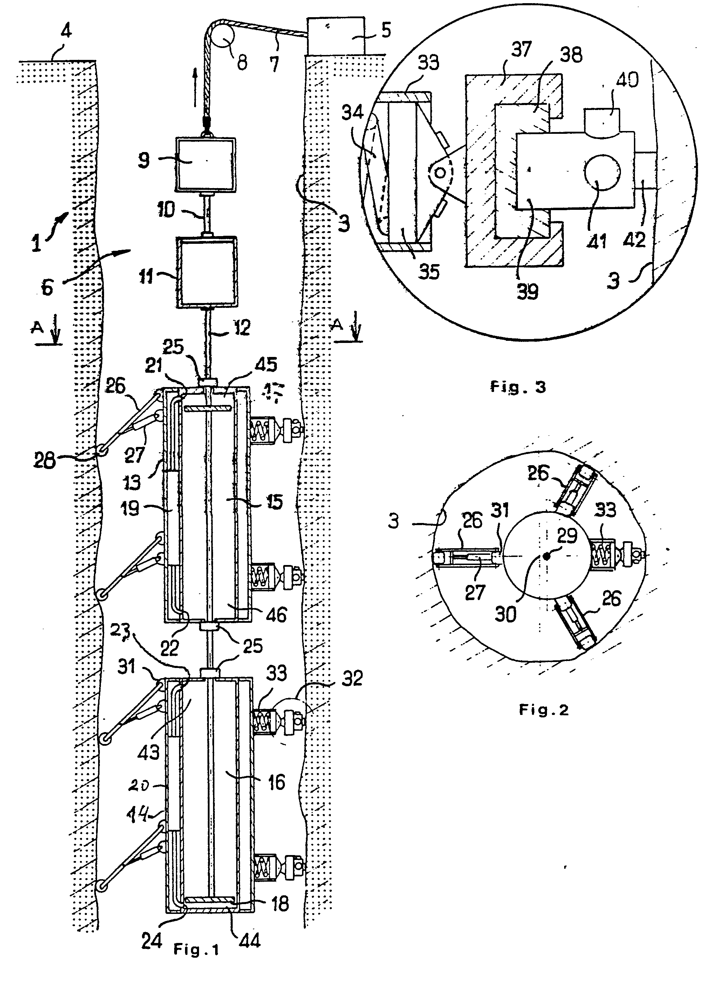

Le dispositif de mesure représenté sur la figure 1 est destiné à être descendu dans un puits foré 1 délimité par sa paroi 3 sensiblement cylindrique et la surface du sol 4. Le puits 1 traverse des couches souterraines qui ne sont pas matérialisées sur les dessins et dont on veut connaître certaines de leurs caractéristiques.

A la surface du sol 4, sont disposés des moyens d'émission d'une énergie sismique et des moyens de commande de déplacement, l'ensemble de ces moyens étant représentés schématiquement sous la forme d'un bloc 5.

Les moyens de commande entraînent, de façon continue, des moyens de traction 6 comprenant un câble 7, guidé par une poulie de renvoi 6 et fixé par une de ses extrémités à une tête de connexion 9 bien connue des spécialistes et commercialisée notamment par la Société Schlumberger. Une tige rigide 10 relie la tête de connexion 9 à un boîtier de jonction 11 dans lequel sont logés tous les accessoires électroniques, hydrauliques et mécaniques nécessaires au fonctionnement du dispositif.

A la base du boîtier 11 est fixée une longue tige 12 traversant deux corps d'outils de mesure 13 et 14. Dans le premier corps d'outils 13 est ménagé un cylindre 15, tandis qu'un cylindre 16 estménagé dans le deuxième corps d'outil 14.

Un premier piston 17 est monté fixe sur la tige 12 tandis qu'un deuxième piston 16 est fixé à l'extrémité inférieure de ladite tige 12. De ce fait, le cylindre 15 et le piston 17 constituent un premier vérin à double effet intégré dans l'outil 13, le cylindre 16 et le piston 18 constituant un deuxième vérin, à double effet, intégré dans l'outil 14.

Les commandes fluidiques et autres organes de fonctionnement desdits vérins n'ont pas été représentés pour être bien connus des spécialistes. Seules deux tubulures hydrauliques 19 et 20 sont représentées, l'une 19 affectée au vérin 15-17 et l'autre 20 au vérin 16-18. Les tubulures 19 et 20 sont équipées, bien entendu, des organes de fermeture et d'ouverture de manière à permettre l'admission et/ou l'évacuation du fluide sous pression actionnant les verins. De même l'alimentation en fluide sous pression est réalisée à travers le boîtier de jonction 11, la tige 12 et des orifices 21, 22 ménagés dans la parois latérale du cylindre 15 et des orifices 23, 24 ménagés dans la paroi du cylindre 16. Enfin des garnitures d'étanchéité 25 assurent un passage étanche de la tige 12 à travers les corps d'outil 13 et 14.

Chaque corps d'outil 13, 14 est muni de bras rétractables 26, commandés chacun par un petit vérin 27 alimenté en fluide sous pression à partir de la tubulure 19, 20 qui lui est associée. Les bras rétractables 26 sont articulés à une de leurs extrémités sur un axe 31 et sont pourvues, à leur autre extrémité, de roulettes 28 susceptibles de se déplacer le long de la paroi du trou foré. Dans l'exemple représenté (figure 2), chaque corps d'outil 13, 14 comprend trois bras 26 disposés à 120° les une des autres, leur axe vertical 29 étant décalé latéralement par rapport à l'axe vertical 30 du puits foré 1.

Chaque outil demesure 13, 14 comprend un ou plusieurs ensembles géophones 32 montés chacun à une extrémité d'un bras rigide 33 et dont l'autre extrémité est fixée au corps d'outil 13, 14. A l'intérieur de chaque bras 33 est logé un ressort 34 qui pousse un patin 35 sur lequel est monté rigidement un boîtier 37. Le boîtier 37 comprend un bloc élastomère 38 dans lequel est insérée la base d'un support de géophones 39. Trois géophones 40 à 42 sont montés sur le support 39, suivant trois directions orthogonales, de manière que chaque géophone 40 à 42 puisse vibrer dans une des directions et détecter ainsi la composante de la vibration se propageant dans sa direction.

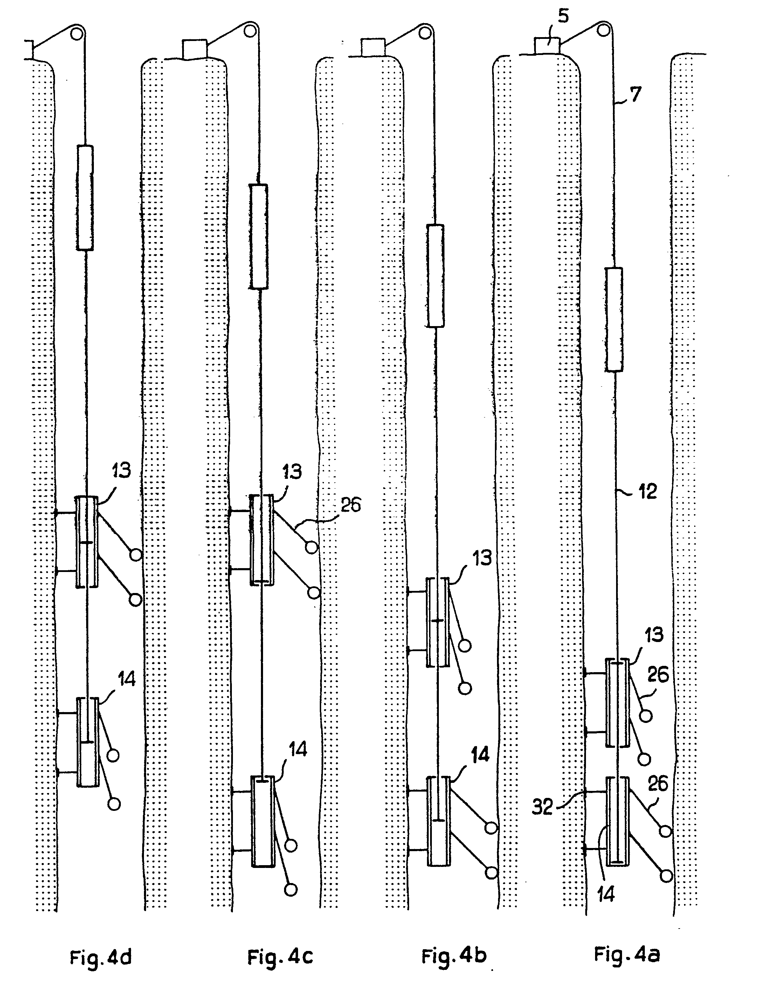

Lorsque l'ensemble des moyens de mesure est descendu dans le puits foré (figure 4), on bloque par exemple l'outil inférieur 14 par déploiement de ses bras 26 pour les plaquer contre la paroi du puits et on amène les ensembles géophones 32 contre la paroi, en position de mesure. Puis, on excite les moyens d'émission incorporés dans le bloc 5 de surface, et qui émettent dans le sol et donc autour du puits foré un signal dont la fréquence est comprise entre 5 et 500 Hz. Le signal émis donne naissance à des ondes qui se propagent dans les couches de terrain autour du puits foré. Pendant cette phase d'émission, seuls les ensembles géophones 32 de l'outil de mesure inférieur 14 sont susceptibles de détecter sous forme de vitesse vibratoire les ondes créées par le signal émis.

En effet, dès que l'ensemble de mesure est mis en place dans le puits 1, c'est-à-dire lorsque l'outil inférieur 14 est situé au niveau à partir duquel les mesures géologiques vont être effectuées, on commence l'enroulement continu du câble 7 par l'intermédiaire des moyens de commande incorporés dans le bloc de surface 5. L'enroulement du câble 7 est réalisé à une vitesse constante V. De ce fait, tous les éléments liés directement à ce câble sont animés d'un mouvement uniforme. Il en est ainsi des moyens de traction constitués par le câble 7, la tête de connexion 9, du boîtier de jonction 11. Comme la tige 12 est solidaire du boîtier de jonction 11, ladite tige est également animée du même mouvement uniforme, dirigé vers le haut, dans l'exemple représenté. Il s'ensuit que les pistons 17 et 16, montés fixes sur la tige 12, sont également animés du même mouvement uniforme, à la vitesse constante V.

Afin de permettre le déplacement du piston 18 dans le cylindre fixe 16, on ouvre la communication entre les chambres supérieure 43 et inférieure 44 délimitées par le piston 18 dans le cylindre 16.

Lors du blocage de l'outil inférieur 14, on débloque l'outil supérieur 13, par rabattement de ses bras 26 le long du corps d'outil (figure 4a), et on admet du fluide sous pression dans la chambre supérieure 45 délimitée par le piston 17 dans le cylindre 15, la communication avec la chambre inférieure 46 du cylindre 15 étant interrompue. La pression adéquate développée dans la chambre 45 chasse vers le haut le cylindre 15 (figure 4b), donc dans la direction de déplacement des moyens de traction, à une vitesse absolue |V'| supérieure à la vitesse absolue |V| du piston 17; de préférence V' est double de V. A la fin de son mouvement ascendant (figure 4c), la vitesse du cylindre 15 s'annule ce qui correspond à une position où l'outil 13 va procéder, à son tour, à une série de mesures géologiques. Pour cela, ses bras 26 sont déployés, et les ensembles géophones associés 32 sont amenés contre la paroi du puits 1, les chambres supérieure 45 et inférieure 46 étant mises en communication.

Les bras 26 de l'outil inférieur 14 sont rabattus (figures 4c et 4d) et le cycle décrit précédemment à propos du déplacement de l'outil supérieur 13 est répété, mais concernant l'outil inférieur cette fois (figures 4c, 4d).

Les cycles de remontée successifs des outils 13 et 14 se répétent surtoute la hauteur du puits faisant l'objet d'une investigation.

On constate donc qu'à un mouvement continu du câble 7 correspond un mouvement discontinu de chacun des outils 13, 14 et que leur association permet de procéder à un plus grand nombre de mesures et dans un temps plus réduit.

Pour que chacun des géophones 40 à 42 puisse vibrer convenablement dans la direction de la composante de la vitesse vibratoire détectée, il faut qu'il soit découplé mécaniquement du corps d'outil 13, 14 qui lui est associé. Or l'élasticité propre s la plus forte de la paroi 3 introduit une liaison élastique sur le ou les géophones 40 à 42. Comme l'élasticité 5 du bloc élastomère 38 agit sur ces derniers, on a donc un système élastique en équilibre constitué par le corps de l'outil et les bras annexes 26 de masse totale M, par les ensembles géophones 32 de masse m, des moyens élastiques 34, 38 interposés entre le corps d'outil 13, 14 et l'ensemble géophone, et par l'élasticité s des roches. Pour obtenir un bon découplage, il est alors nécessaire de déterminer une élasticité S qui doit être d'autant plus grande que la masse M est grande par rapport à la masse m. Les calculs montrent que lorsque S = s, la vitesse vibratoire de chaque ensemble géophone est la moitié de celle des roches. Dans ce cas, il est nécessaire que la fréquence de résonance de la masse m avec l'élasticité S soit égale à celle de la masse m avec l'élasticité s.

En admettant une fréquence de résonance F égale à 100 Hz, on calcule la déflexion sous charge des moyens élastiques à partir de la formule $\rho = \frac{g}{F^2 4\pi}$ qui est très peu différente de $\frac{1}{4F^2}$. Ainsi, pour F = 100 Hz, on obtient $\rho = \frac{1}{4 \cdot 10^4}$ = 0,025 mm.

Des moyens élastiques présentant une telle déflexion sont facilement réalisables soit en acier, soit en une matière élastique telle que le néoprène.

Bien évidemment, on peut utiliser d'autres rapports entre S et s et d'autres fréquences de résonance dès lors que lesdites fréquences sont choisies dans le spectre de fréquences émis par les moyens d'émission, c'est-à-dire en fait entre 5 et 500 Hz.

Pour que la vitesse du géophone soit la plus voisine possible de celle de la roche et par exemple égale aux 9/10 de celle-ci, on peut prendre S = 9 s. Avec une masse m égale à 0,1 kg, il faut utiliser des moyens élastiques ayant une flexibilité égale à 0,225 mm/Newton et ce, pour S = 9 s.

Bien entendu, l'invention n'est nullement limitée aux modes de réalisation de l'exemple décrit et représenté, elle est susceptible de nombreuses variantes accessibles à l'homme de l'art, suivant les applications envisagées et sans s'écarter pour cela du cadre de l'invention.

C'est ainsi qu'au lieu d'intégrer les vérins 15-17 et 16-18 dans les corps d'outil 13, 14, on peut réaliser un ensemble de mesure dans lequel lesdits vérins seraient dissociés des corps d'outil. Un exemple de réalisation consisterait à relier le boîtier de jonction 11 par une tige rigide à un cylindre d'un premier vérin dont la tige serait reliée au corps du premier outil supérieur. Le cylindre du deuxième vérin serait solidaire du corps d'outil supérieur, tandis que le piston serait solidaire du deuxième corps de l'outil inférieur. Le fonctionnement d'un tel ensemble serait analogue à celui décrit dans la présente demande puisqu'à un mouvement continu du cylindre du premier vérin correspondrait un mouvement discontinu des outils supérieur et inférieur.

En effet, à une position initiale de départ, le piston du premier vérin serait dans une position basse dans son cylindre, alors que le piston du deuxième vérin serait dans une position haute dans son cylindre. Une admission d'un fluide sous pression dans le deuxième cylindre (chambre supérieure) permettrait à l'outil supérieur de se déplacer vers le haut, alors que l'outil inférieur procèderait aux mesures géologiques. La seconde phase consisterait à immobiliser l'outil supérieur pour qu'il procède aux mesures, et admettre du fluide sous pression dans la chambre inférieure du deuxième vérin pour permettre le déplacement de l'outil inférieur qui viendrait occuper une nouvelle position de travail.

Il faut également noter qu'au lieu d'utiliser deux verins et deux outils, on pourrait n'utiliser qu'un verin et un outil, les courses du piston et du cylindre étant déterminées pour permettre le découplage recherché.

Dans tout ce qui précède, on a fait référence à des liaisons électriques à travers les moyens de traction et plus précisément à travers le câble 7. Toutefois, on peut concevoir que d'autres moyens peuvent être mis en oeuvre. Parmi ces moyens, on peut citer ceux consistant en un émetteur de télémesure, du type radio ou ultrasonore par exemple, qui est incorporé dans chacun des ensembles géophones. Cet émetteur délivre un signal représentatif de chaque composante de l'onde reçue par chacun des géophones. Les signaux délivrés par les émetteurs sont reçus sur un ou plusieurs récepteurs disposés dans le boîtier de jonction 11 par exemple, ou dans tout autre élément approprié du dispositif interposé entre les moyens de commande et un des outils de mesure. Une telle solution permet de s'affranchir de la nécessité d'incorporer les liaisons électriques dans les corps d'outil.

**Revendications**

1. Procédé de mesures géophysiques dans un puits foré (1) du type dans lequel, le long des parois (3) dudit puits foré on déplace de manière discontinue, au moins un outil de mesure (13, 14), ledit outil étant relié à des moyens de traction (7 à 11) déplacés on continu et dont la vitesse de déplacement est commandée par des moyens de commande disposés à la surface (4) du puits foré, consistant à animer l'outil (13, 14) d'une vitesse relative par rapport aux moyens de traction égale et opposée à la vitesse absolue des moyens de traction (7 à 11) de manière à rendre nulle la vitesse absolue de l'outil (13, 14) pendant des périodes de mesure, la vitesse relative de l'outil (13, 14) étant de même sens que la vitesse absolue des moyens de traction entre les périodes de mesure de telle sorte que durant ces périodes la vitesse absolue de l'outil soit supérieure à la vitesse absolue des moyens de traction.

2. Procédé selon la revendication 1, caractérisé en ce que la vitesse absolue de l'outil (13, 14) est double de la vitesse absolue des moyens de traction (7 à 11).

3. Dispositif pour la mise en oeuvre du procédé selon la revendication 1 et 2, du type comprenant des moyens de commande, disposés en surface (4), pour la commande en déplacements de moyens de traction (7 à 11) disposés dans le puits foré (1), au moins un outil de mesure (13, 14) disposé dans ledit puits, et caractérisé en ce qu'il comprend au moins un vérin à double effet (15, 17; 16, 18) dont une partie mobile (17, 16) est commandée en déplacement par les moyens de traction qui sont déplacés en continu, et dont l'autre partie mobile (15, 16) commande le déplacement discontinu dudit outil de mesure; et des moyens de commande fluidique (19, 20) de déplacement relatif entre les deux parties mobiles dudit vérin.

4. Dispositif selon la revendication 3, caractérisé en ce que le vérin (15, 17; 16, 18) est une partie intégrante du corps de l'outil de mesure.

5. Dispositif selon la revendication 1, caractérisé en ce qu'il comprend deux outils de mesure (13, 14) et deux vérins (15, 17; 16, 18) à double effet, un desdits vérins (15, 17) étant interposé entre les moyens de traction (7 à 11) et un desdits outils (13), tandis que l'autre vérin (16, 18) est interposé entre les deux outils de mesure (13, 14).

6. Dispositif selon la revendication 5, caractérisé en ce que dans le corps de chaque outil de mesure est intégré un vérin.

7. Dispositif selon l'une des revendications 3 à 6, du type comprenant des moyens d'émission (5), capables de délivrer des signaux d'émission, au moins un géophone (32) monté sur des organes élastiques qui sont reliés audit corps d'outil, ledit géophone détectant des ondes acoustiques générées par lesdits signaux d'émission après propagation dans des couches souterraines qui présentent une élasticité propre au niveau du géophone, des moyens d'enregistrement et de traitement des signaux électriques délivrés par ledit géophone en réponse aux ondes acoustiques reçues, caractérisé en ce que les organes élastiques sont constitués par des moyens (38) souples dans au moins deux directions et interposés entre le géophone (40, 42) et des moyens d'application (33, 35) reliés au corps d'outil et destinés à appliquer ledit géophone contre la paroi (3) du puits de forage pendant chaque détection desdites ondes, en ce que l'élasticité (S) des moyens souples est au moins égale à l'élasticité s la plus forte de la couche souterraine traversée par le puits (1), et en ce que la fréquence de résonance de la masse du géophone (m) avec les moyens souples (S) soit au plus égale à la fréquence de résonance de ladite masse de géophone (m) avec ladite élasticité la plus forte (s).

8. Dispositif selon la revendication 7, caractérisé en ce que les moyens souples sont constitués par un ressort souple dans les trois directions.

9. Dispositif selon la revendication 7, caractérisé en ce qu'il comprend trois géophones (40, 42) montés orthogonalement les une par rapport aux autres de manière à permettre la détection des ondes se propageant dans les directions des géophones.

10. Dispositif selon la revendication 7, caractérisé en ce que le corps de l'outil (13, 14) est excentré par rapport à l'axé vertical (30) du puits foré, et comprend au moins un bras rétractable (26) dont une extrémité est articulée sur ledit corps d'outil tandis que l'autre extrémité libre est en appui sur la paroi (3) du puits foré sur laquelle sont en contact le ou les géophones, ledit corps d'outil étant plaque, par une de ses faces, contre une autre partie de la paroi dudit puits foré.

11. Dispositif selon la revendication 7, caractérisé en ce que les fréquences de résonance sont comprises dans les limites du spectre de fréquence des signaux émis.

12. Dispositif selon la revendication 7, caractérisé en ce que les moyens souples sont constitués par un boîtier (37) relié au corps de l'outil par un bras rigide (33) et dans lequel sont montés trois ressorts disposés orthogonalement les une par rapport aux autres.

13. Dispositif selon la revendication 7, caractérisé en ce que les moyens souples sont constitués par un boîtier (37) relié au corps de l'outil par un bras rigide (33) et dans lequel est disposé un bloc d'élastomère (36) dans lequel est logé en partie le géophone.

14. Dispositif selon l'une des revendications 7 à 13, caractérisé en ce que le géophone comprend un émetteur de télémesure notamment radio ou ultrasonore qui transmet un signal représentatif de la composante de l'onde reçue sur ledit géophone, à un récepteur de télémesure disposé dans un élément de réception interposé entre les moyens de commande de traction et un des outils de mesure.

**Patentansprüche**

1. Verfahren für geophysikalische Messungen in einem Bohrloch (1), nach dem entlang der Bohrlochwandung (3) wenigstens ein Meßwerkzeug (13, 14) diskontinuierlich verfahren wird, das mit einer kontinuierlich laufenden Zugeinrichtung (7 bis 11) verbunden ist, deren Fahrgeschwindigkeit von einer an der Oberfläche (4) des Bohrlochs befindlichen Steuereinrichtung gesteuert wird, wobei das Werkzeug (13, 14) mit einer zur Absolutgeschwindigkeit der Zugeinrichtung (7 bis 11) gleich großen und entgegengesetzten Relativgeschwindigkeit bezüglich der Zugeinrichtung derart angeregt wird, daß die Absolutgeschwindigkeit des Werkzeuges (13,14) während der Meßperioden gleich Null wird, wobei die Relativgeschwindigkeit (13, 14) des Werkzeugs die gleiche Richtung wie die Absolutgeschwindigkeit der Zugeinrichtung zwischen den Meßperioden annimmt, so daß während dieser Perioden die Absolutgeschwindigkeit des Werkzeuges oberhalb der Absolutgeschwindigkeit der Zugeinrichtung liegt.

2. Verfahren gemäß Anspruch 1, dadurch gekennzeichnet, daß die Absolutgeschwindigkeit des Werkzeuges (13, 14) doppelt so groß wie die Absolutgeschwindigkeit der Zugeinrichtung (7 bis 11) ist.

3. Anordnung zur Durchführung des Verfahrens gemäß Anspruch 1 und 2, mit einer an der Oberfläche (4) befindlichen Steuereinrichtung zur Steuerung der Verschiebungen der im Bohrloch (1) laufenden Zugeinrichtung (7 bis 11) und wenigstens einem im Bohrloch befindlichen Meßwerkzeug (13, 14), dadurch gekennzeichnet, daß eine doppelt-wirkende Hebevorrichtung (15, 17; 16, 18), von der der eine bewegliche Teil (17, 18) in seiner Verschiebung von der kontinuierlich bewegten Zugeinrichtung gesteuert wird und der andere bewegliche Teil (15, 16) die diskontinuierliche Verschiebung des Meßwerkzeuges steuert, und eine mit einem Strömungsmittel arbeitende Steuereinrichtung (19, 20) für eine Relativverschiebung zwischen den zwei beweglichen Teilen der Hebevorrichtung vorgesehen sind.

4. Anordnung gemäß Anspruch 3, dadurch gekennzeichnet, daß die Hebevorrichtung (15, 17; 16, 18) in den Körper des Meßwerkzeuges integriert ist.

5. Anordnung gemäß Anspruch 1, dadurch gekennzeichnet, daß zwei Meßwerkzeuge (13, 14) und zwei doppelt-wirkende Hebevorrichtungen (15, 17; 16, 18) vorgesehen sind, wobei eine von den zwei Hebevorrichtungen (15, 17) zwischen der Zugeinrichtung (7 bis 11) und einem der Werkzeuge (13) liegt, während die andere Hebevorrichtung (16, 18) zwischen den zwei Meßwerkzeugen (13, 14) liegt.

6. Anordnung gemäß Anspruch 5, dadurch gekennzeichnet, daß der Körper von jedem Meßwerkzeug in eine Hebevorrichtung integriert ist.

7. Anordnung gemäß einem der Ansprüche 3 bis 6, mit einer Sendeeinrichtung (5) zur Abgabe von Sendesignalen, wenigstens einem an elastischen, mit dem Werkzeugkörper verbundenen Organen befestigtes Geophon, das die von den Sendesignalen erzeugten akustischen Wellen nach Ausbreitung in den unterirdischen Schichten mit einer dem Niveau des Geophons angemessenen Elastizität erfaßt, und mit einer Aufzeichnungs- und Verarbeitungseinrichtung für die von dem Geophon in Abhängigkeit von den empfangenen akustischen Wellen abgegebenen elektrischen Signale, dadurch gekennzeichnet, daß die elastischen Organe von einer in mindestens zwei Richtungen biegsamen elastischen Einrichtung (38) gebildet sind, die zwischen dem Geophon (40, 42) und einer Applikationseinrichtung (33, 35) angeordnet ist, die mit dem Werkzeugkörper verbunden und für eine Applikation des Geophons an der Bohrlochwandung während des Erfassens der Wellen bestimmt ist, daß die Elastizität (S) der elastischen Einrichtung mindestens gleich der größten Elastizität (s) der das Bohrloch (1) querenden unterirdischen Schicht ist, und daß die Resonanzfrequenz der Masse des Geophons (m) mit der elastischen Einrichtung (S) höchstens gleich der Resonanzfrequenz dieser Geophonmasse (m) mit der größten Elastizität (S) ist.

8. Anordnung gemäß Anspruch 7, dadurch gekennzeichnet, daß die elastische Einrichtung von einer in drei Richtungen biegsamen Feder gebildet ist.

9. Anordnung gemäß Anspruch 7, dadurch gekennzeichnet, daß drei Geophone (40, 42) vorgesehen sind, die senkrecht zueinander derart angeordnet sind, daß die sich in den Richtungen der Geophone ausbreitenden Wellen erfaßt werden können.

10. Anordnung gemäß Anspruch 7, dadurch gekennzeichnet, daß der Werkzeugkörper (13, 14) exzentrisch zur Vertikalachse (30) des Bohrlochs angeordnet ist und mindestens einen einschiebbaren Arm (26) aufweist, von dem das eine Ende an dem Werkzeugkörper angelenkt ist, während das freie Ende an der Bohrlochwandung (3) abgestützt ist, mit der das oder die Geophone in Kontakt stehen, wobei der Werkzeugkörper mit einer seiner Seiten an einem anderen Abschnitt der Wandung dieses Bohrlochs anliegt.

11. Anordnung gemäß Anspruch 7, dadurch gekennzeichnet, daß die Resonanzfrequenzen innerhalb der Grenzen des Frequenzspektrums der ausgesandten Signale liegen.

12. Anordnung gemäß Anspruch 7, dadurch gekennzeichnet, daß die elastische Einrichtung von einem mit dem Werkzeugkörper mittels eines starren Armes (33) verbundenen Kasten (37) gebildet ist, in dem drei Federn senkrecht zueinander angeordnet sind.

13. Anordnung gemäß Anspruch 7, dadurch gekennzeichnet, daß die elastische Einrichtung von einem mit dem Werkzeugkörper mittels eines starren Armes (33) verbundenen Kasten (37) gebildet ist, in dem ein elastomerer Block (38) angeordnet ist, in dem teilweise das Geophon untergebracht ist.

14. Anordnung gemäß einem der Ansprüche 7 bis 13, dadurch gekennzeichnet, daß das Geophon einen Sender für eine Fernübertragung, insbesondere einen Radiosender oder Ultraschallsender, aufweist, der ein die von dem Geophon empfangene Wellenkomponente repräsentierendes Signal an einen Empfänger sendet, der sich in einem zwischen der Zug-Steuereinrichtung und einem der Werkzeuge angeordneten Empfangselement befindet.

**Claims**

1. Method for carrying out geophysical measurements within a wellbore (1) of the type in which, along the walls (3) of said drilled well is discontinuously moved at least one measuring tool (13, 14), which is connected to continuously moved traction, pulling or hauling means (7 to 11) and whose speed of displacement is controlled by control means disposed at the ground surface (4) of the wellbore comprising giving tool (13, 14) a relative speed with respect to the traction means equal and opposite to the absolute speed of the traction means (7 to 11), so as to make zero the absolute speed of tool (13, 14) during the measuring periods, the relative speed of tool (13, 14) being in the same sense as the absolute speed of the traction means between the measuring periods, in such a way that during these periods the absolute speed of the tool exceeds the absolute speed of the traction means.

2. Method according to claim 1, characterized in that the absolute speed of the tool (13, 14) is double the absolute speed of the traction means (7 to 11).

3. Apparatus for performing the method according to claims 1 and 2 of the type comprising control means arranged at the ground surface (4) for controlling the displacements of traction means (7 to 11) disposed into the wellbore (1), at least one measuring tool (13, 14) located in said wellbore and characterized in that it comprises at least one double acting jack (15, 17, 16, 18), whereof a mobile part (17, 18) is in displacement controlled by the continuously moved traction means and whereof the other mobile part (15, 16) controls the discontinuous movement of the measuring tool, as well as means (19, 20) for the fluidic control of the relative displacement between the two mobile parts of said jack.

4. Apparatus according to claim 3, characterized in that the jack (15, 17, 16, 18) is an integral part of the measuring tool body.

5. Apparatus according to claim 1, characterized in that it comprises two measuring tools (13, 14) and two double-acting jacks (15, 17, 16, 18), one of said jacks (15, 17) being interposed between the traction means (7 to 11) and one of said tools (13), whilst the other jack (16, 18) is interposed between the two measuring tools (13, 14).

6. Apparatus according to claim 5, characterized in that a jack is integrated into the body of each measuring tool.

7. Apparatus according to one of the claims 3 to 6, of the type comprising emission means (5) able to supply emission signals, at least one geophone (32) mounted on elastic members connected to the tool body, said geophone detecting acoustic or sound waves generated by said emission signals after propagation in the subterranean layers having an inherent elasticity level with the geophone, means for recording and processing the electric signals supplied by said geophone in response to the acoustic waves received, characterized in that the elastic members are constituted by means (38) flexible in at least two directions and interposed between the geophone (40, 42) and application means (33, 35) connected to the tool body and serving to apply said geophone against the wall (3) of the wellbore during each detection of said waves, in that the elasticity (S) of the flexible means is at least equal to the strongest elasticity (s) of the subterranean layer traversed by the wellbore (1) and in that the resonant frequency of the mass of the geophone (m) with the flexible means (S) is at the most equal to the resonant frequency of said mass of geophone (m) with said strongest elasticity (s).

8. Apparatus according to claim 7, characterized in that the flexible means are constituted by a spring which is flexible in three directions.

9. Apparatus according to claim 7, characterized in that it comprises three geophones (40, 42) mounted orthogonally with respect to one another so as to permit the detection of waves propagating in the directions of the geophones.

10. Apparatus according to claim 7, characterized in that the body of tool (13, 14) is offcentered with respect to the vertical axis (30) of the wellbore and comprises at least one retractable arm (26), whereof one end is articulated to said tool body, whilst the other free end bears on the wall (3) of the drilled well with which the geophone or geophones are in contact, said tool body being engaged, by one of its faces, with another part of the wall of said wellbore.

11. Apparatus according to claim 7, characterized in that the resonant frequencies are within the limits of the frequency range of the emitted signals.

12. Apparatus according to claim 7, characterized in that the flexible means are constituted by a box (37) connected to the body of the tool by a rigid arm (33) and in which are mounted three springs disposed orthogonally with respect to one another.

13. Apparatus according to claim 7, characterized in that the flexible means are constituted by a box (37) connected to the body of the tool by a rigid arm (33) and in which is disposed an elastomer block (35) in which is partly located the geophone.

14. Apparatus according to one of the claims 7 to 13, characterized in that the geophone comprises a telemetry transmitter, particularly an ultrasonic or radio transmitter, which transmits a signal representing the component of the wave received on said geophone to a telemetry receiver disposed in a reception element interposed between the traction control means and one of the measuring tools.

Fig. 1

Fig. 2

Fig. 3

0 148 667

Fig. 4d      Fig. 4c      Fig. 4b      Fig. 4a